(19) Europäisches Patentamt
European Patent Office
Office européen des brevets

(11) **EP 1 445 599 B1**

(12) **EUROPEAN PATENT SPECIFICATION**

(45) Date of publication and mention
of the grant of the patent:
**07.10.2009 Bulletin 2009/41**

(51) Int Cl.:
***G01N 11/08*** *(2006.01)*

(21) Application number: **03386003.2**

(22) Date of filing: **07.02.2003**

(54) **U-tube rheometer for the dynamic measurement of elasticity**

U-ROHR-RHEOMETER ZUR DYNAMISCHEN MESSUNG DER ELASTIZITÄT

RHEOMETRE COMPRENANT UN TUBE EN FORME DE U, POUR LA MESURE DYNAMIQUE DE L'ELASTICITE

(84) Designated Contracting States:
**AT BE BG CH CY CZ DE DK EE ES FI FR GB GR HU IE IT LI LU MC NL PT SE SI SK TR**

(43) Date of publication of application:
**11.08.2004 Bulletin 2004/33**

(73) Proprietors:
• **Rafailidis, Stilianos**
**55236 Panorama,**
**Thessaloniki (GR)**
• **Zhenmiao, Xu**
**55236 Panorama,**
**Thessaloniki (GR)**
• **Karapantsios, Theodoros**
**570 13 Oreokastro,**
**Thessaloniki (GR)**
• **Tellos, Evaggelos**
**56224 Evosmos,**
**Thessaloniki (GR)**
• **Bounarelis, Christos**
**54351 Ano Toumba,**
**Thessaloniki (GR)**

(72) Inventors:
• **Raphaelides, Stylianos, Dr.**
**55236 Panorama,**
**Thessaloniki (GR)**
• **Xu, Zhenmiao, Dr.**
**55236 Panorama,**
**Thessaloniki (GR)**
• **Karapantsios, Theodoros, Dr.**
**57013 Oreokastro,**
**Thessaloniki (GR)**
• **Tellos, Evaggelos**
**56224 Evosmos,**
**Thessaloniki (GR)**
• **Bounarelis, Christos**
**54351 Ano Toumba,**
**Thessaloniki (GR)**

(56) References cited:
FR-A- 2 588 959        GB-A- 434 994
US-A- 3 839 914        US-A- 4 554 821
US-A- 4 691 558

Remarks:
Claims 11-17 are deemed to be abandoned due to non-payment of the claims fees (Rule 31 (2) EPC).

## Description

FIELD OF INVENTION

The present invention relates generally to apparatus and methods, namely a rheometer of U-tube type and the related measurement method for determining the complex modulus of gels and other materials at controlled temperature when they are subjected to shear force introduced by applying a sinusoidal oscillating air pressure.

BACKGROUND OF THE INVENTION

Rheological properties of materials, including elasticity, viscosity etc., are often important parameters to characterize a product, or to be used as pertinent indicators for manufacturing processes. For example, regarding yogurt as a dessert product, its rigidity and viscosity are important texture parameters for consumer acceptance and they can be considered and employed as definite indicators to observe the development of the yogurt formation process- from a thin mixture of milk and rennet to a thick gel-like material. By monitoring the changes in the rheological behavior, an investigation of the formation mechanism of yogurt gel network can be conducted. The technique can also serve as a process control method for yogurt production in industrial scale.

Regarding the rigidity measurement for gel-like materials E. Kinkel and E. Sauer proposed a method in Z, Angew. Chem, 1925, 38, 413, in which a gelatin solution was allowed to set as a cylindrical column in a glass tube. In measurement, an air pressure was applied to one end of the tube causing a deformation to the gelatin and the rigidity modulus can be calculated from the air pressure and the resulting displacement of the center of the gelatin meniscus. This method was not adopted due to the difficulty in accurate measurement of the displacement. Later, a modification to the method was reported by P.R. Saunders and A.G.Ward in "An absolute method for the rigidity modulus of gelatin gels" in Proceedings of the Second International Congress on Rheology pp. 284-290 (V.G.W.Harrison, ed) Academic Press (1954). The proposed method, widely known as U-tube method, has thereafter stimulated an increasing research on rheological behavior of gel-like materials. In this method the volume displacement of the gelatin gel was measured instead of displacement of the meniscus. The U-tube apparatus was comprised of two vertical glass tubes of different radii joined together, a wide limb and a capillary limb. In the capillary limb, and the lower part of the wide limb, mercury was contained as an index liquid. On top of the mercury in the wide limb a column of gel is allowed to set. Small air pressures were applied above the gel surface and the corresponding volume displacements were calculated from the rise of the mercury in the vertical capillary limb of the U-tube. Due to the significant radius difference between the two limbs a very small deformation to the gel gave a large movement of mercury meniscus so that the volume displacement can be accurately measured. From the effective pressure, i.e., the applied air pressure corrected for any back pressure due to the displacement of the index liquid, and the corresponding volume deformation the absolute rigidity of the gel can be calculated with a modified Poiseuille's equation.

It was found that the U-tube method of Saunders and Ward (1954) can be conveniently used for studying gelatin gel having rigidities from about 0.1 to $50 \times 10^4$ dynes/cm2. Gelatin gel produces no syneresis, i.e., a film of exuded liquid collected at the surface which prevents adhesion between the gel and a measuring device. If a gel studied is syneresing, it slips, as a whole under the applied air pressure. In an attempt to overcome this problem H.Komatsu and P. Sherman introduced many small protuberances on the inside wall of the wide bore tube, reported in Journal of Texture Studies 5 (1974) 97-103, and this enabled W/O emulsions to be studied successfully with the U-tube method. Atkin and Sherman (1980) later examined the viscoelastic properties through creep compliance-time measurement on some weak food gels, including natural yogurt, yogurt containing fruit pieces, jams containing fruit, and mayonnaise and from rheological analysis more meaningful information than conventional quality control methods were obtained.

G. Stainsby, S. G. Ring and G. R.Chivers in their paper "A Static Method for Determining the Absolute Shear Modulus of a Syneresing Gel", J. of Texture Studies, Vol.15 pp23-32(1984) reported a modification of U-tube which has allowed the determination of shear modulus of food gels made from amylose, starch, K-carrageenan and egg white, all of which exhibit extensive syneresis. To prevent slippage the inside of the wide bore tube is coated with a single layer of anti-bumping granules of approximately 1 mm diameter. The apparatus used a modular design in which gels were prepared and aged in the wide bore tubes, and connected to the capillary only during rheological measurement. In order to avoid the development of back pressure during measurement the capillary and wide bore tube are in line. The apparatus was subsequently modified to permit investigation of the viscoelastic properties of rennetted milk gels, which have a much weaker internal structure.

In a paper titled "An Apparatus for measuring the elastic properties of very soft gels", Laboratory Practice, Oct. 1957. G.W.Scott Blair described his U-tube device and with it he was able to measure very weak gels having rigidity from about 0.1 to $5.0 \times 10^2$ dynes/cm2. His U-tube apparatus consisted of a U-tube of two identical arms in which some 50ml of rennetted milk were set. To reduce the syneresis and movement as a whole compressed air was applied to either surface of the sample alternately, by means of a 4-way tap, and the other side of the U-tube to which pressure was not applied was connected to the nearly horizontal capillary. Another advantage of the design was the no direct contact between the sample and the index liquid. With this device he was able to follow the increasing rigidity of rennetted milk gels in terms of generalized modulus and in terms of creep, recovery, relaxation and elastic "memory".

In viscosity measurement, tube flow remains one of the most fundamental, important and accurate methods. Comparing to a horizontal tube, a displacement of liquid column in a U-tube provides restoring force owing to the gravity effect; hence it can be used as both a manometer and a tube viscometer, as demonstrated in patent GB 434 994 A, September 1935 and patent FR-A-2 588 959, April 1987. U-tube has also been used for testing a gelling process, as described in patent US-A-4 691 558 September 1987, wherein a pressure pulse is applied to the sample in U-tube from one side and a differential pressure transducer was used for monitoring the transmissibility of the pressure pulse through the sample, hence the progress of a gelling process. Unfortunately an absolute value of gel strength can not be derived from the test. In principle, a comprehensive rheological characterization of a sample can be achieved with a U-tube method of adequate design, as achieved in this invention, and yet the method has a number of important advantages including the simplicity in construction, very little disturbance to sample, which is important for some bio-products such as rennetted milk, and tolerance to a wide range of samples, some of which can not be handled by conventional cone & plate rheometer, such as yogurt with fruit pieces.

It is the object of the present invention to develop a rheometer capable of determining, in both static and dynamic (oscillatory) modes, the rheological behavior of gel-like or other materials over a wide range of rigidity values, including very low rigidity. It is also an object of the present invention to design an automatic and computerized rheometer based on a U-tube method in which means of pressure measurement, instead of displacement of index fluid in capillary, is used for the determination of volume displacement.

SUMMARY OF THE INVENTION

According to the present invention an apparatus according to claim 1 and a method according to claim 11 are provided. A rheometer for measuring the rheological properties of a gel or other materials comprises a U-tube unit where the sample is contained in a U-shaped channel, to which at one side an air pressure, delivered from moving piston in cylinder, is applied to the test sample, causing a sample volume displacement along the U-shaped channel and consequently a change in pressure in the enclosed chamber above the sample at the other side. The counterbalancing effect of the pressure in the said enclosed chamber against the said applied pressure results in a diminishing effective driving pressure, hence a limited volume displacement even for a sample of very low rigidity, allowing measurements to be performed on weak gels at a controllable small disturbance of the sample. The rigidity of the sample is calculated from the applied pressure and the corresponding volume displacement, derived from the changing pressure in the said enclosed chamber, using an equation analogous to Poiseuille's law. Thermostatic control for the U-tube unit is provided.

BRIEF DESCRIPTION OF FIGURES

The invention will now be described in detail, reference is being made to the accompanying drawings which illustrate a preferred embodiment and in which

FIG. 1 is a schematic of the rheometer, which shows the consisting elements and the configuration;
FIG. 2 is a schematic of the U-tube unit; and
FIG. 3 is a schematic of the assembly for temperature control in which the U-tube unit was inserted in between the two thermostatic elements.

DETAILED DESCRIPTION OF THE PREFERRED EMBODIMENT

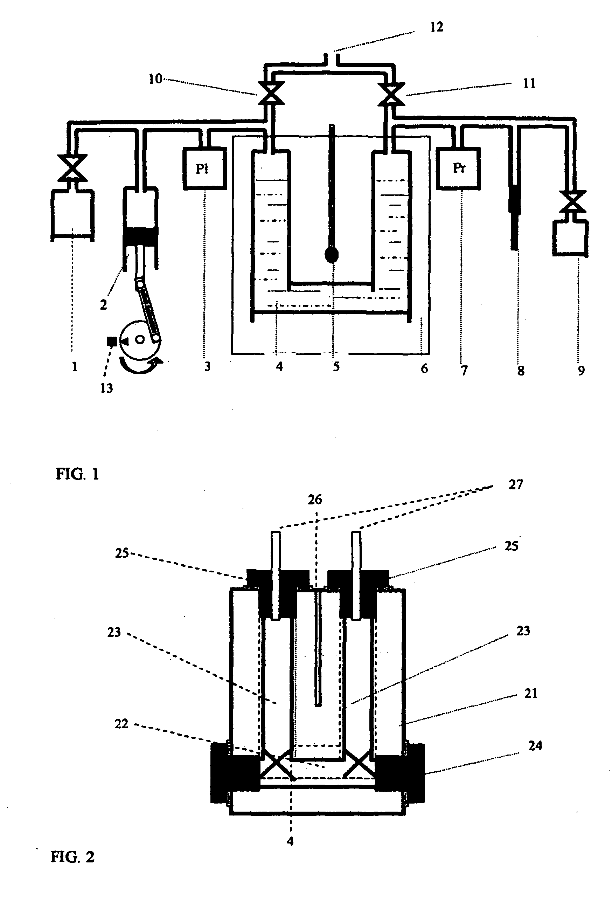

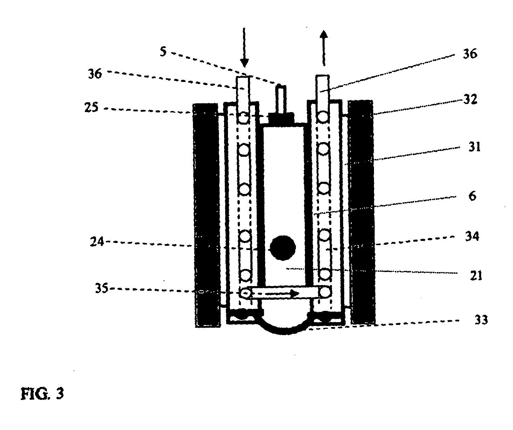

According to FIG. 1 the embodiment of the rheometer of the present invention comprises the U-tube unit 4, which has a U-shaped tunnel wherein the test sample is contained; The two identical limbs and the two associated openings of the U-tube, for the convenience of description, are referred to as 1 side and r side respectively in the following paragraphs. The U-tube unit is connected with tubing to other elements of the rheometer. To 1 side connected are the valve 10; the pressure transmitter 3; the air pressure generating unit 2; and one or more dead volume-valve assembly 1. To r side connected are the valve 11; the pressure transmitter 7; the scaled mini piston-cylinder unit 8; and one or more dead volume-valve assembly 9; According to Fig. 3 the U-tube unit is inserted in between two thermostat units 6 which, in conjunction with the temperature sensor 5 mounted in the central region of the U-tube unit, provide a thermostatic environment for the sample. All said valves are preferably solenoid valves and the said valve 10 and valve 11 communicate on one side to atmosphere through opening 12. The operation of the rheometer is automatic and computerized.

The working principle of the rheometer can be described briefly as follows: The test sample is loaded into the U-shaped channel of the U-tube unit 4 whose temperature is set by the thermostat unit 6 and the valves 10 and 11 are open to atmosphere. In measurement both sides of the sample are enclosed from atmosphere by turning off valves 10 and 11, followed by the application, to I side of the sample, of a controlled air pressure created from the air pressure generating unit 2. The applied air pressure is recorded in the computer through the pressure transmitter 3. The range of the applied air pressure can be selected by including a number of dead volume elements 1 through its control valve. The volume displacement of the sample under the applied air pressure causes a change in air pressure in the enclosed chamber on the r side of the U-tube which is also recorded in the computer through pressure transmitter 7. The air pressure on the r side is called back pressure, which counterbalances the applied air pressure on the I side, resulting in a reduced effective pressure, namely the difference of the air pressure on the two sides. The magnitude of the back pressure can be altered by including a number of dead volume elements 9 through its control valve. The utilization of the back pressure in the present invention allows rigidity measurement applied to very weak gels at a predictable volume displacement limit. The scaled mini piston-cylinder 8, for which a syringe can be used, provides a means for determining the dead volume existed in the r side above the sample. The volume displacement can then be calculated from the back pressure. The rigidity modulus of the sample is calculated from the effective pressure and the resulting volume displacement.

The detailed preferable configuration of the U-tube unit embodiment is shown in FIG.2. The unit was made from a rectangular block of aluminum 21, through whose central plane were drilled three communicating bores, namely through the lower part a horizontal bore 22 and to which intersect the two vertical bores 23. The three bores have the same diameter and were all tapped on the inner wall with screw thread. A hole 26 in the middle part of the unit was made to accommodate the temperature sensor. By virtue of the engaging thread the two ends of the horizontal bore 22 can be sealed with stopper- spacer assemblies 24 to form the U-tube, i.e., in conjunction with the two vertical bores 23 a U-shaped channel can then be formed. The connecting tube 27 has one end fixed to the top stopper-spacer assemblies 25, leaving the other end for communicating with other parts of the rheometer. Advantages of the design include a) Good temperature uniformity throughout the U-tube unit due to the high thermal conductivity of aluminum; b) The screw thread made on the inner wall of the bores serves both purposes of fastening the stoppers and preventing slippage of test samples against the U-tube wall; and c) By removing the stopper-spacer assemblies the U-tube channel can be readily cleaned.

Thermostatic condition is essential in a rheological measurement. A preferable design is shown in Fig.3 comprising two thermostats 6 made from rectangular aluminum blocks, through whose central planes continuous zigzag channels were made. A flexible tube 35 was used for communicating the zigzag channels in the two thermostats 6, while nozzle 36 fixed to the remaining two openings of the zigzag channels allowing use with a circulation bath for low temperature settings. Besides, mounted on the outer surface of each thermostat 6 there is an electric heater 31 which, in conjunction with the temperature sensor 5, can provide temperature control above room temperature. The two thermostats 6 were connected with plate springs 33 leaving a gap in between into which the U-tube unit is inserted providing a good thermal contact. The sandwich assembly was embraced with thermal insulator 32 for enhanced temperature uniformity throughout the U-tube - thermostat assembly.

The air pressure generating unit 2 is based on an engine mechanism comprising a piston in cylinder and a crank-connecting rod. The rotating crank driven by an electric motor, preferably a stepping motor or a DC servo motor, reciprocates the piston. A simple harmonic movement can be achieved by making the connecting rod much longer than the crank. A Scotch yoke mechanism has also been tried to deliver a simple harmonic movement. The crank reference position detector 13 is a switch of mechanical or optical type which changes its logic status when the crank moves to the reference position, when the rheometer is ready for the next measurement. The logic status can be read into the computer. In normal measurement at first the valves 10 and 11 are open allowing the sample to communicate with atmosphere from both sides, and then are closed to isolate the sample from both sides, allowing a pressure applied to the sample from one side. Various forms of pressure versus time can be produced through motor rotation control, such as sinusoidal, ramp, step or other sophisticated forms. By applying alternate positive and negative pressure the tendency of sample shifting toward one side in the U-tube can be eliminated.

The two pressure transmitters 3 and 7 provide the means for monitoring the air pressures applied on 1 side and r side of the sample, respectively. These pressure transmitters preferably comprise a silicon piezoresistive type pressure transducer and the related signal processing circuits capable of sending air pressure signal to the computer.

The dead volume - control valve units 1 and 9 are incorporated into the 1 side and the r side of the U-tube respectively. When their control valves are turned on, the corresponding volumes are included into the system, altering the total dead volume on the related side of the U-tube.

The scaled mini piston-cylinder unit 8, which can be a scaled syringe, is connected to the r side of the U-tube for delivering a known volume displacement in determining the dead volume on that side of the U-tube.

Theoretically the rheometer works on a well-known ideal gas law stating that for air in an enclosed chamber the product of pressure P and the volume V remains constant in an isothermal process, expressed by the basic equation $P V = P0 V0$, where the subscript 0 represents a reference status. We can apply this basic equation to the present U-tube rheometer. When the valves 10 and 11 are open to atmosphere allowing pressure equilibrium achieved on both sides of the U-tube, therefore P0=l atm, this status is designated as the reference status at which the crank is normally driven to the reference position, detected by 13, and the piston rests at approximately the mid stroke position. On closing valves 10 and 11 certain amount of air is enclosed on each side of the U-tube and the following status can then be investigated with the basic equation. Applying the basic equation to the enclosed volume on the I side of the U-tube we obtain an equation

P1 V1 = (P10 +$\Delta$P1) (V10 +$\Delta$V1) = P10 V10, where a new status is also expressed in terms of an increment, namely $\Delta$P1 and $\Delta$V1, with respect to the reference status. It is evident that the magnitude of the pressure increment $\Delta$P1, which is the driving pressure in a measurement, created from a given volume increment $\Delta$V1 delivered from a piston displacement is dependent on V10, namely the initial volume enclosed in the 1 side. By means of including /excluding dead volume element 1, V10 can then be adjusted for delivering a desired magnitude of air pressure, namely a smaller V10 for higher pressure and a bigger V10 for lower pressure. Besides, in a static measurement mode a reduced air pressure can also be obtained by a smaller rotation angle of the driving motor, consequently a small piston displacement. Both approaches are used in practice through programming.

The amplitude of volume displacement of a reciprocating piston and the amplitudes of the resulting air pressure for all the combinations of dead volume element 1 can be calculated from the relevant dimensions in the rheometer with the basic equation mentioned above, and can be checked by experiment as well. An air pressure created from a given crank angular displacement with respect to the reference position can be calculated based on the amplitude and a sine relation. Amplitudes at various dead volume combinations were stored in computer for lookup in creating a desired air pressure.

Similarly, by applying the basic equation to the enclosed volume on the r side of the U-tube, we obtain an equation analogous to that for the I side:

$$Pr \: Vr = (Pr0 + \Delta Pr)(Vr0 + \Delta Vr) = Pr0 \: Vr0$$

It is obvious that the volume displacement $\Delta$Vr causes a pressure increment $\Delta$Pr whose magnitude is influenced by the initial enclosed volume Vr0. Therefore, by including /excluding dead volume element 9, Vr0, hence $\Delta$Pr, can be adjusted. APr, called back pressure, results to a diminishing effective pressure which is the pressure difference on both sides of the sample. This auto adaptive nature allows measurement being implemented on a sample of very low rigidity, namely, a small air pressure applied to the sample causes a AVr, which further causes a APr comparable to the applied driving pressure, resulting in a significantly reduced effective air pressure, hence a limited volume displacement. The extent of the volume displacement $\Delta$Vr can be adjusted by including various dead volume elements 9.

It is also evident from the equation that if Vr0 is known, the volume displacement of the sample, $\Delta$Vr, can be calculated from pressure increment $\Delta$Pr Vr0, the initial dead volume enclosed in the r side of the sample, can be determined from a known volume increment, $\Delta$Vr, delivered by the scaled mini piston-cylinder 8, and the resulting pressure increment, APr, based on the above equation. In practice Vr0 was divided into two parts which were determined separately. First the U-tube unit was removed and the opening of the duct was blocked, then the dead volume was determined using the mini piston-cylinder 8 as aforementioned avoiding errors caused by sample deformation; whereas the dead volume existing in r side of the U-tube unit is determined from its dimensions. The value of Vr0 is then obtained by summing up the two parts. For a given construction, it is obvious that the values of the first part of Vr0 for all the possible combinations of dead volume element 9, are rheometer constants, therefore can be stored in computer for lookup, whereas the second part of Vr0 should be determined for each sample. The value of Vr0 was determined and input to computer before test started.

For an entirely elastic sample the shear modulus measured with U-tube method can be calculated from the following equation analogous to that of Poiseuille's for tube flow:

$$G = \pi R^4 (Pl - Pr) / 8 L \: \Delta Vr$$

Where P1 and Pr are the pressures measured at I side and r side of the U-tube respectively; L is the total length of the sample; R is the effective radius of the U-tube; and $\Delta$Vr is the volume displacement of the sample which can be calculated from the resulting APr and the associated enclosed dead volume Vr0, then we have the following equation for G calculated from pressure measurements,

$$G = (\pi R^4 / 8 L \: Vr0)(Pl - Pr)(1 + Pr0 / \Delta Pr)$$

Assuming Pr0 / ΔPr >> 1, this is often the case in practice, then G can be approximated by the following equation

$$G = (\pi R^4 \, Pr0 \, / \, 8 \, L \, Vr0) \, ( \, \Delta Pl \, / \, \Delta Pr \, - \, 1)$$

From which the working essence of the present invention becomes even more apparent, i.e. G is measured by the ratio of the gauge pressures measured from both sides of the sample, namely ΔPl / ΔPr. For a sample of very low modulus the ratio of ΔPl / ΔPr is reduced to about 1, indicating a back pressure ΔPr nearly equal to the driving pressure ΔPl. By adequate selection of the driving pressure ΔPl and the dead volume Vr0, with the present invention, a rheological measurement can be realized.

Dynamic or creep measurements from this apparatus are available for rheological modeling and viscoelastic analysis.

The main operation procedures include: a) Prepare test sample in the U-tube at controlled temperature leaving valves 10 and 11 open. b) Bring the crank to the reference position. c) Close valves 10 and 11. d) Activate the air pressure generating unit for a desired driving air pressure and record the pressures on both side of the sample. e) Repeat the measurement at an interval to monitor the sample. To avoid possible sample shifting toward one side in the U-tube, which might happen to a syneresing gel, it is advantageous that balanced driving pressures, namely alternate positive and negative driving pressures to be applied.

## Claims

1. An apparatus for determining shear modules of gels and other materials comprising:

    sample containing means, having a U-shaped channel for receiving the sample, and
    means by which the U-shaped channel communicates to other means of said apparatus through its two limbs;
    pressure generating means, including means for creating gas pressure alteration applied to the sample in said U-shaped channel on one side by being connected to one of the limbs;
    pressure release means, including two valves (10, 11), connected to first and second limb respectively, for communicating the sample to atmosphere on the respective side when the respective valve on that side opens;
    pressure measuring means, including two pressure transmitters (3,7), each of them being applied on either side of the sample, for measuring pressures against time on either side of the sample;
    said apparatus **characterized in that** it further comprises
    enclosed volume alteration means, including two dead volume elements (1,9) connected through valves to first and second limbs, respectively, for altering the sum of the enclosed volume on either side of the sample; and
    known volume displacement means (8) connected to one side of the U-shaped channel, consisting of a scaled mini-piston in a cylinder, for delivering a known volume displacement.

2. An apparatus as defined in claim 1 wherein said sample containing means is mode from a block (21) of metal, through whose central plane three bores (22,23) drilled namely two vertical bores (2,3) intersecting with a horizontal bore (22), furthermore these bores having the same diameter and being all tapped with screw thread in their inner walls and wherein, a hole in the central region of said metal block is provided for inserting a temperature sensor.

3. An apparatus as defined in claim 2, further including two stopper-spacer, assemblies (25) for hermetically sealing the two openings of said horizontal bore (22) by virtue of engaging said thread so that the three bores form said U-shaped channel wherein the test sample is contained.

4. According to claims 1 and 2 wherein two stopper-spacer assemblies (24) are provided for hermetically sealing the two openings of the vertical bores (23) in the said U-tube unit by virtue of engaging thread to facilitate the U-tube unit being connected to other elements of the rheometer through the connecting tubes fixed to the said stoppers.

5. An apparatus as defined in claim 1 wherein said pressure generating means includes an engine mechanism comprising a piston-in-cylinder driven by a motor, preferably a stepping motor, through a crank-connecting rod mechanism;

6. An apparatus as defined in claim 5 including a reference position detector (23) which can be a switch of mechanical, optical or other type, capable of changing status when the crank is in the said reference position, which preferably corresponds to a mid stroke piston position.

**7.** An apparatus as defined in claim 1 further comprising a thermostat means (6) for sensing and controlling the temperature of said sample containing means.

**8.** An as defined in claim 7, wherein said thermostat means comprising two thermostats (6) made from rectangular aluminum blocks in which continuous zigzag channels were made for use with circulating bath.

**9.** An apparatus as defined in claim 8, wherein said thermostat means further comprising means joining said two thermostats in such a way that leaving a gap in between allowing said sample containing means as claimed in claim 2 to fit in, forming a sandwich structure.

**10.** An apparatus as defined in claim 8, wherein said two thermostats (6) further comprise two electric heaters mounted on the outer surface of each thermostat (6).

**11.** A method of measuring dynamic modulus of a sample comprising:

loading the sample into said U-shaped channel;
creating a pressure increment by applying a sinusoidal pressure versus time on one side of said sample;
recording the pressures on either side of the sample;

**characterized in that** the method further comprises
adjusting the pressure increment by either including or excluding a dead volume element (1).

**12.** A method as defined in claim 11, further comprising controlling the sample to target temperature.

**13.** A method as defined in claim 11, further comprising determining enclosed dead volume from pressure response to known volume change.

**14.** A method as defined in claim 11, further comprising setting atmosphere pressure to the sample on both sides.

**15.** A method as defined in claim 11, further comprising determining amplitude and phase angle for recorded pressures measured from both sides of the sample.

**16.** A method as defined in claim 11, further comprising altering amplitude of said sinusoidal pressure by including/ excluding optional dead volume.

**Patentansprüche**

**1.** Es handelt sich um eine Apparatur zur Bestimmung des Elastizitätskoeffizienten von Gels und anderen Stoffen. Sie beinhaltet:

a) Probehälter, das ist ein Rohr in U-Form, für die Probe.
b) Teile, mit denen das U-Rohr mit anderen Teilen der Apparatur verbunden wird:
b1) Teile für die Druckerzeugung, welche ihrerseits Teile beinhalten, die die Änderung des pneumatischen Druckes auf die Probe in dem U-Rohr verursachen. Dieser Druck wird an dem einen Schenkel des U-Rohrs ausgeübt
b2) den Druckablassteil, welcher aus zwei elektromagnetischen Ventilen (10,11) besteht und mit dem ersten und zweiten Schenkel des U-Rohrs entsprechend verbunden wird. Wenn das Ventil auf ist, kann die Probe mit der atmosphärischen Umgebung von der entsprechende Seite Verbindung haben.
b3) das Druckmessgerät welches aus zwei Druckkonvertern besteht (3,7). Jeder von diesen Konvertern kann auf jeder Seite der Probe angepasst werden, damit man den Druck in Abhängigkeit von der Zeit von beiden Seiten oder einzeln messen kann.

Diese Apparatur wird zusätzlich **dadurch** charakterisiert, dass es Teile gibt, die das eingeschlossene Volumen verändern lassen kann. Diese Teile beinhalten die Totvolumen (1,9) die mit entsprechenden Ventilen mit dem ersten und zweiten Schenkel verbunden sind. Dadurch kann die Veränderung des eingeschlossenen Volumens von jeder Seite der Probe durchgeführt werden. Sie hat auch einen Teil (8) mit bekannten Volumenverdrängung, der an der einen Seite des U-Rohrs angeschlossen ist und besteht aus einem kleinen dimensionierten geeichten Zylinderkolben, um eine angegebene Volumenverdrängtmg zu verursachen.

2. Es handelt sich um eine Apparatur, wie es in Patentanspruch 1 beschrieben wurde, wobei der Probenhälter aus massivem Metall (21) hergestellt ist. Im inneren Zentralteil sind drei zylindrische (Rohre) (22,23) gebohrt, d.h. zwei senkrechte (23) die sich mit einer horizontalen (22) schneiden. Diese Rohre haben alle den gleichen Durchmesser und alle drei haben innere Gewinde. Im zentralen Bereich des Metallstückes ist ein Loch gebohrt, wo ein Thermometerfühler angepasst wird.

3. Die Apparatur, wie es im Patentanspruch 2 erwähnt, weist zusätzlich zwei Teile auf, nämlich dieVerschlüsse/Abstandhalter (25) für das hermetische Schließen der zwei Öffnungen des horizontalen Rohres (22). Dieser Vorgang wird mit Hilfe der inneren Gewinde, in den Zylindern vorgenommen Die drei Zylinder bilden das U-Rohr, wo die Probe enthalten ist.

4. Gemäß den Patentansprüchen 1 und 2, gibt es zwei Verschlüsse /Abstandhalter (24) die mit Hilfe ihrer Außengewinde für das hermetische Schließen der zwei Öffnungen des vertikalen Rohrzylinders in dem erwähnten U-Rohr sorgen. Somit ist es leicht, die Einheit des U-Rohrs mit anderen Teilen des Rheometers mit Verbindungsrohren, die an den erwähnten Verschlüssen angepasst werden, anzuschließen.

5. Die Apparatur, wie im Patentanspruch 1 genannt wurde, besteht aus einem Kolben, der in einem Zylinder angepasst wurde, wo das erwähnte Teil den Druck erzeugt. Der Kolben bewegt sich mit Hilfe eines Motors, bevorzugt einem Schrittmotor, der wiederum mit einer Kurbelwelle in Gang gesetzt wird.

6. Die Apparatur, wie in Patentanspruch 5 festgesetzt wurde, hat einen Fühler für das Aufspuren einer Bezugstelle (13), welche ein mechanischer, optischer oder ähnlicher Schalter sein kann, der imstande ist die Richtung des Kolbens zu ändern, wenn die Kurbel sich an dieser Bezugsstelle befindet. Diese Bezugsstelle wird bevorzugt gesetzt wenn der Kolben die halbe Strecke zurückgelegt hat.

7. Die Apparatur, wie es im Patentanspruch 1 festgesetzt wurde, beinhaltet ein thermostatisiertes System (6) für die Registrierung und Kontrolle der Temperatur des erwähnten Probehälters.

8. Die Apparatur, wie im Patentanspruch 7 beschrieben, enthält im Inneren eine zick- zack Leitung für den Transport des Kühlwassers vom Wasserbad, wobei das thermostatisierte System aus zwei Thermostaten besteht (6), die aus massiven Aluminiumplatten hergestellt werden.

9. Die Apparatur wie im Patentanspruch 8 dargelegt, bildet eine Struktur "Sandwich", wobei das thermostatisierten System zusätzliche Teile hat (Stahlfeder) um bei der Verbindung der zwei Thermostate genug Zwischenraum untereinander zuzulassen, damit der Probenhälter, wie es Patentanspruch 2 verlangt, genau in den Raum passt.

10. Die Apparatur, wie in Patentanspruch 8 festgesetzt, beinhaltet zwei Thermostate (6) mit elektrischen Heizelementen, die an der Außenseite jedes Thermostats (6) angebracht sind.

11. Ein Verfahren zur Messung des dynamischen Koeffizienten der Probe beinhaltet folgende Schritte: 1. Einsetzen der Probe in das U-Rohr. 2. Erzeugung von Druck an der einen Seite der Probe. Dies geschieht durch schrittweise zunehmenden, sinnusförmigen Druck in Abhängigkeit der Zeit 3. Registrierung des Druckes auf allen Seiten der Probe. Diese Methode wird ausgezeichnet durch die schrittweise Erhöhung des Druckes mit oder ohne Einbeziehung des Totvolumens (1).

12. Ein Verfahren, wie es im Patentanspruch 11 festgesetzt wurde, beinhaltet die Kontrolle der Probe, bezogen auf die erwünschte Temperatur.

13. Ein Verfahren, wie es Patentanspruch 11 bestimmt, berechnet das eingeschlossen Totvohumens, durch die Änderung des Druckes in Abhängigkeit der Änderung eines bekannten Volumens.

14. Ein Verfahren, wie es Patentanspruch 11 festsetzt, lässt die Regulierung des Druckes auf die Proben auf beiden Seiten der Probe zu.

**15.** Ein Verfahren, wie es Patentanspruch 11 festgelegt, nimmt zusätzlich die Berechnung der Breite und Phasenwinkel für die registrierten Drucke vor, die an beiden Seiten der Probe gemessen wurden.

**16.** Ein Verfahren, wie es Patentanspruch 11 bestimmt, beinhaltet zusätzlich die Veränderung der Breite des erwähnten sinnusförmigen Druckes mit oder ohne ausgewähltes Totvolumen.

**Revendications**

**1.** Un appareil pour la détermination du module de cisaillement de gels et d'autres matériaux comprenant:

un conteneur d'échantillon, qui est un canal en U pour la réception de l'échantillon, et
des pièces par lesquelles le canal en U communique avec les autres pièces de l'appareil mentionné par ses deux branches;
un dispositif de génération de pression, qui comprend un dispositif de création de variation de la pression pneumatique appliquée sur l'échantillon dans le canal en U, sur un côté étant raccordé à l'une des branches;
un dispositif de dégagement de pression, qui comprend deux valves (10, 11), raccordées à la première et la deuxième branche respectivement, pour la communication de l'échantillon avec l'atmosphère sur le côté respectif quand la valve respective sur ce côté s'ouvre;
un dispositif de mesure de pression, qui comprend deux transmetteurs de pression (3,7), chacun d'entre eux étant appliqué sur chaque côté de l'échantillon, pour mesurer les pressions en fonction du temps de chaque côté de l'échantillon;
l'appareil mentionné est **caractérisé par le fait qu'**il comprend en plus
des dispositifs de variation de volume inclus, comprenant deux éléments de volume mort (1,9) raccordées par des valves à la première et la deuxième branche, respectivement, pour faire varier la somme du volume inclus sur chaque côté de l'échantillon; et une pièce de déplacement de volume connu (8) raccordées à un côté du canal en U, se composant d'un mini-piston gradué dans un cylindre, pour livrer un volume de déplacement connu.

**2.** Un appareil, comme défini dans la revendication 1, où le conteneur d'échantillon mentionné est fait à partir d'un bloc métallique (21), dans la partie centrale duquel ont été forés trois alésages cylindriques (22,23), à savoir deux alésages verticaux (23) s'intersectant avec un alésage horizontal (22); en outre ces alésages sont du même diamètre et ont un filetage sur leur paroi interne et où dans la région centrale du bloc métallique mentionné un trou a été foré pour insérer une sonde de température.

**3.** Un appareil, comme défini dans la revendication 2, comprenant en plus deux assemblages de bouchon/entretoise (25) pour sceller hermétiquement les deux ouvertures de l'alésage horizontal mentionné (22) à l'aide de leurs filetages de sorte que les trois alésages forment le canal en U mentionné, où l'échantillon d'essai est contenu.

**4.** Selon les revendications 1 et 2, où deux assemblages de bouchon/entretoise (24) sont prévus pour sceller hermétiquement les deux ouvertures des alésages verticaux (23) dans l'unité mentionnée de canal en U, à l'aide d'un filetage d'engagement pour faciliter que l'unité de canal en U soit raccordée à d'autres éléments du rhéomètre par des tuyaux fixés au bouchons mentionnés.

**5.** Un appareil, comme défini dans la revendication 1, où le dispositif de génération de pression mentionné comprend un mécanisme mécanique comportant un piston dans un cylindre qui fonctionne par un moteur, de préférence un moteur pas à pas, à l'aide d'un mécanisme à bielle.

**6.** Un appareil, comme défini dans la revendication 5, comprenant un détecteur de position de référence (13), qui peut être d'un type mécanique, optique ou autre, capable de changer le statut quand la bielle est en position de référence, qui correspond de préférence à la position de mi-course de piston.

**7.** Un appareil, comme défini dans la revendication 1, comprenant en plus un système de thermostatisation (6) pour détecter et contrôler la température dans le conteneur d'échantillon mentionné.

**8.** Un appareil, comme défini dans la revendication 7, où le système de thermostatisation mentionné comprend deux thermostats (6) fabriqués à partir des blocs rectangulaires en aluminium dans lesquelles des canaux continus en zigzag ont été forés pour l'utilisation avec le bain de circulation.

**9.** Un appareil, comme défini dans la revendication 8, où le système de thermostatisation mentionné comprend en plus des pièces de jonction de deux thermostats mentionnés de telle façon à ce qu'elles laissent un espace entre elles, permettant au conteneur d'échantillon, comme défini dans la revendication 2, de s'y insérer, formant une structure de sandwich.

**10.** Un appareil, comme défini dans la revendication 8, où les deux thermostats mentionnés (6) comprennent en plus deux radiateurs électriques adaptés sur la surface extérieure de chaque thermostat (6).

**11.** Une méthode de mesure du module dynamique d'un échantillon comprenant:

le chargement de l'échantillon dans le canal en U mentionné;
la création d'un incrément de pression, en appliquant une pression sinusoïdale en fonction du temps sur un côté de l'échantillon mentionné;
l'enregistrement des pressions de chaque côté de l'échantillon;

**caractérisée par** ceci aussi, la méthode comprend
le réglage de l'incrément de pression en incluant ou en excluant un élément de volume mort (1).

**12.** Une méthode, comme définie dans la revendication 11, comprenant en plus le contrôle de la température de l'échantillon par rapport à la température cible.

**13.** Une méthode, comme définie dans la revendication 11, comprenant en plus la détermination du volume mort inclus à partir de la réponse de pression au changement de volume connu.

**14.** Une méthode, comme définie dans la revendication 11, comprenant en plus le réglage de la pression atmosphérique sur l'échantillon des deux côtés.

**15.** Une méthode, comme définie dans la revendication 11, comprenant en plus la détermination de l'amplitude et de l'angle de phase pour les pressions enregistrées qui sont mesurées à partir des deux côtés de l'échantillon.

**16.** Une méthode, comme définie dans la revendication 11, comprenant en plus la variation de l'amplitude de la pression sinusoïdale mentionnée par inclusion/exclusion du volume mort optionnel.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 434994 A
- FR 2588959 A
- US 4691558 A

### Non-patent literature cited in the description

- **E. Kinkel ; E. Sauer.** *Z, Angew. Chem,* 1925, vol. 38, 413
- An absolute method for the rigidity modulus of gelatin gels. **P.R. Saunders ; A.G.Ward.** Proceedings of the Second International Congress on Rheology. Academic Press, 1954, 284-290
- **H.Komatsu ; P. Sherman.** *Journal of Texture Studies,* 1974, vol. 5, 97-103
- **G. Stainsby ; S. G. Ring ; G. R.Chivers.** A Static Method for Determining the Absolute Shear Modulus of a Syneresing Gel. *J. of Texture Studies,* 1984, vol. 15, 23-32
- **G.W.Scott Blair.** An Apparatus for measuring the elastic properties of very soft gels. *Laboratory Practice,* October 1957